# NOUVEAU FASCICULE DE BREVET EUROPEEN

(11) **EP 0 442 811 B2**
(45) Date de publication et mention de la décision concernant l'opposition: **09.09.1998**
(45) Mention de la délivrance du brevet: 15.12.1993
(21) Numéro de dépôt: 91400369.4
(22) Date de dépôt: 14.02.1991
(51) Int. Cl.: A01G 31/00

(54) **Technique de culture hors-sol utilisant des matériaux issus de substrats usagés**
Technik erdloser Pflanzenkultur unter Verwendung von Abfallmaterialien aus verbrauchten Substraten
Technique of soilless culture utilizing waste material from used substrates

(30) Priorité: 14.02.1990 FR 9001717
(43) Date de publication de la demande: 21.08.1991
(73) Titulaire: ISOVER SAINT-GOBAIN, 92400 Courbevoie (FR)
(72) Inventeur: Robert, Marie-Agnès, F-66200 Elne (FR)
(74) Mandataire: Le Vaguerese, Sylvain Jacques

(56) Documents cités:
- EP-A- 0 201 426
- NL-A- 8 802 806
- DERWENT PUBLICATIONS LTD., LONDON GB; DATABASE WPIL, ACCESSION NO. 90042395,WEEK 9006, & NL-A-8802806 (YAMAMOTO CO. LTD.) 16.JANVIER 90
- DERWENT PUBLICATONS LTD: LONDON GB; DATABASE WPIL,ACCESSION NO. 83791882, WEEK 8342, & JP-A-58152416 (KIMURAKENKYUSHO KK) 10 septembre 1983
- INERT GROWING MEDIA RESEARCH at Vineland, W.A. Straver and R.G. Fluit, Nov. 1988;
- ROCKWOOL GROWING MEDIA for Greenhouse Vegetables, W.A. Straver and E.M. Stoop, March 1991.

## Description

L'invention est relative à une technique de culture hors-sol comprenant l'utilisation de matériaux à base de fibres minérales dont une part au moins provient de substrats usagés.

Le développement des techniques de culture hors-sol, en particulier sur des substrats artificiels, pose le problème de l'élimination de ces substrats après usage. La question se pose avec d'autant plus de difficulté que ces substrats sont plus volumineux et non dégradables.

Les substrats à base de laine minérale (laine de roche ou laine de verre) représentent, à l'heure actuelle, les produits les plus abondamment utilisés dans ces techniques de culture hors-sol et c'est donc à leur propos que la question se pose de façon la plus pressante.

Pour les substrats usagés à base de laine minérale, l'élimination jusqu'à présent s'est principalement limitée à la mise à la décharge. Cette pratique, en raison des volumes à traiter, n'est pas toujours acceptée. Il convient donc d'envisager d'autres solutions.

Récemment, la demanderesse s'est proposée de retraiter les substrats usagés, en brûlant les matières organiques qu'ils contiennent en vue de l'incorporation du verre aux matières premières introduites dans les fours de verrerie. Cette technique fait l'objet d'une demande de brevet français No. 89 10043. Le coût de ce traitement n'est pas négligeable dans le cas de produits fortement chargés en matière organique.

Les inventeurs se sont efforcés de trouver des manières de valoriser les substrats usagés, de telle sorte que ces produits retrouvent une certaine valeur économique. Ils sont partis pour cela d'une analyse des matériaux considérés.

En pratique, les substrats de culture hors-sol à base de laine minérale se présentent, à l'ordinaire, comme des produits de forme bien déterminée (pain parallélépipédique, cube, nappe) fonction des utilisations considérées. La croissance des plants sur ces substrats conduit, à terme, à leur déformation et, plus encore, à une dégradation de leur structure qui s'accompagne ordinairement d'une dégradation de leurs propriétés. Pour ces raisons, même si pour certains il est possible de les utiliser pour plusieurs cultures successives, les substrats à base de fibre minérale doivent être renouvelés régulièrement. En pratique, il est rare que ces produits servent plus de deux fois et une tendance actuelle est de développer des produits peu coûteux, d'usage unique, permettant ainsi d'éviter toute opération intermédiaire de remise en condition, telle que la stérilisation. Cette dernière tendance accentue encore le besoin de techniques permettant de disposer de ces produits après usage.

Les inventeurs ont eu l'idée de chercher des conditions dans lesquelles les substrats usagés pourraient être réutilisés comme support de culture. Ils ont ainsi écarté l'éventualité d'une réutilisation dans leur forme d'origine. Comme indiqué ci-dessus, les substrats usagés ne présentent plus les caractéristiques requises. La culture modifie profondément les caractéristiques mécaniques (résistance à l'écrasement notamment, mais aussi leur simple cohésion qui seule permet les déplacements nécessités parles stérilisations), les caractéristiques hydriques et aussi, à terme, rend difficile l'obtention de conditions stériles.

Les inventeurs proposent, en conséquence, de transformer les substrats usagés et de les mettre en oeuvre dans des conditions différentes de celles correspondant à leur première utilisation.

Selon l'invention, les substrats de culture sont définis selon la revendication 1.

Les particules ou nodules utilisés selon l'invention proviennent d'une opération de déchiquetage ou broyage. Leurs formes et leurs dimensions sont variables. En pratique, ces particules ne dépassent pas quelques centimètres. Des dimensions typiques se situent entre 0,5 et 3 cm et, de préférence, entre 0,5 et 2 cm.

Le matériau fibreux constitué de nodules est suffisamment tassé dans l'enveloppe pour être parfaitement immobilisé. En règle générale, le produit fibreux se trouve dans des conditions de masse volumique sensiblement plus importante que celle du produit d'origine. Ceci est dû au fait que la structure des feutres initiaux a disparu. Les fibres dans les nodules offrent une moindre résistance à la compression.

La masse volumique des nodules rassemblés dans le substrat selon l'invention correspondra, ordinairement, à des feutres d'origine de masse volumique sensiblement plus faible. La masse volumique dans le substrat selon l'invention sera comprise entre 1,5 et 4 fois la masse volumique du feutre d'origine et, le plus fréquemment, entre 2 et 3 fois la masse volumique initiale En pratique, l'accroissement de masse volumique est d'autant plus important qu'elle est plus faible dans les substrats d'origine. Les feutres de laine de verre, utilisés comme substrats, dont la masse volumique est habituellement comprise entre 20 et 50 kg/m³ pourront conduire, selon l'invention, à des substrats formés à partir de nodules dont la masse volumique apparente se situe entre 40 et 90 kg/cm³. Pour des substrats de laine de roche, la masse volumique du feutre d'origine se situe entre 40 et 90 kg/m³ et celle du substrat formé de nodule se situera, d'ordinaire, entre 60 et 120 kg/m³.

De façon habituelle selon l'invention, les substrats sont constitués de fibres de même nature (verre ou roche). Il est possible néanmoins de mélanger des particules de laine de verre et des particules de laine de roche. Dans ce cas, les masses volumiques atteintes se situent dans des valeurs intermédiaires à celles indiquées ci-dessus et dépendent des proportions respectives de chaque sorte.

La forme conférée aux substrats selon l'invention est déterminée par celle de l'enveloppe. La pratique est de former une sorte de "coussin" ou "sac" plus ou moins allongé et moins épais que large. La largeur est ordinairement au moins deux fois l'épaisseur de ce coussin.

L'épaisseur avant l'humidification est de 5 à 15 cm et, plus usuellement, de 7 à 10 cm. La largeur du coussin est typiquement de 15 à 30 cm.

La longueur du substrat est principalement fonction du volume qu'il peut présenter et du nombre de plants placés sur ce substrat.

Pour des raisons de commodité de manipulation, chaque substrat comporte ordinairement 2 ou 3 plants pour une longueur qui se situe entre 80 et 140 cm.

Globalement, pour les modes de culture indiqués dans la suite de la description et pour des plants de type tomates, concombres ..., le volume offert à chaque plant est d'au moins 5 l. Il n'y a pas de limite au volume utile - plus celui-ci est grand, plus grande est la réserve d'eau offerte à la plante - néanmoins, dans les conditions habituelles, le volume offert à chaque plant ne dépasse pas 20 l.

Pour aborder la question des propriétés hydriques de ces substrats, il est nécessaire au préalable de bien voir à quel type d'utilisation ils sont destinés.

Parmi les techniques de culture hors-sol, les plus caractéristiques sont celles qui s'écartent le plus des conditions "naturelles". A ce type correspondent, notamment, les cultures conduites en serres chauffées. Ces cultures sont particulièrement développées aux Pays-Bas. Il s'agit alors de cultures nécessitant de gros investissements et engendrant des coûts de production élevés. Pour la rentabilité de ce type de culture, il est nécessaire d'obtenir des rendements élevés et, plus encore, de viser des productions précoces dont les prix de vente sont plus élevés. Les conditions de culture sont donc fixées par une série d'impératifs. Il faut tout d'abord commencer la culture très tôt dans la saison, dès le mois de novembre par exemple. La culture, pour une part importante, est donc conduite dans des périodes de jours très courts, périodes pendant lesquelles les plantes croissent peu et sont particulièrement sensibles à l'équilibre air/eau du substrat. Dans ces conditions, il est nécessaire de parfaitement conjuguer la capacité du substrat sur ce point précis de l'équilibre hydrique et les apports en eau ou solution nutritive. Les serres modernes sont parfaitement équipées pour une alimentation relativement fréquente permettant un ajustement de la teneur en eau. Pour cette raison, il est possible et préférable d'utiliser des substrats présentant un rapport air/eau relativement élevé, par exemple de 10 à 50 %, ce qui permet d'écarter tout risque d'asphyxie. Pour ces cultures, le coût du substrat supportable est relativement important. Par suite, il est possible de choisir des substrats sophistiqués comme ceux constitués à partir de feutres de fibres minérales.

D'autres techniques de culture sont mises en oeuvre qui requièrent des conditions moins rigoureusement contrôlées. Il s'agit, notamment, des cultures conduites plus tardivement dans la saison, par exemple à partir du mois de février ou du mois de mars et qui, pour cette raison, bénéficient d'une lumière plus abondante. Ces cultures sont conduites en particulier dans le midi de la France, en Espagne et en Italie sous ce que l'on nomme des "tunnels", c'est-à-dire des abris formés d'une armature recouverte d'un film plastique translucide. Dans ces installations relativement légères, les cultures sont traditionnellement conduites sur des substrats peu élaborés comme la tourbe ou la pouzzolane. Ces substrats sont choisis pour leur faible coût. Par opposition aux cultures précoces menées dans les serres de verre chauffées, ici la production est plus tardive, les rendements moins élevés et les coûts de production doivent en contre-partie être aussi faibles que possible.

Les caractéristiques des matériaux tels que la tourbe ou la pouzzolane ne répondent pas parfaitement aux besoins des plantes. Pour la pouzzolane, sa rétention d'eau est très faible et nécessite des arrosages fréquents, ce qui constitue une gêne certaine. C'est en plus un matériau difficile à manipuler en raison de son poids et dont l'opération de désinfection n'est pas garantie. La difficulté de manipulation de la pouzzolane est particulièrement gênante dans les exploitations qui conduisent à des séries de cultures différentes imposant des substrats également différents. La tourbe, pour sa part, présente une stérilité incertaine quels que soient les traitements mis en oeuvre en raison de l'apparition d'espèces plus résistantes. Par ailleurs, le rapport air/eau pour la tourbe est très faible. Il se situe à environ 5 %. A ce niveau, même en période de croissance et donc de besoin en eau, le risque d'asphyxie des plantes est important si l'on ne dispose pas de moyens très précis pour contrôler l'alimentation. Plus encore, comme nous le verrons dans les essais comparatifs, l'eau emmagasinée par la tourbe est fortement fixée et donc peu disponible pour les plantes.

Les substrats selon l'invention offrent des avantages intéressants pour la culture en "tunnel". En premier, il s'agit de produits relativement peu coûteux. L'utilisation de produits usagés est bien entendu un facteur important dans la détermination du coût, et les traitements que subissent les feutres de culture pour constituer les substrats selon l'invention sont également peu coûteux. Néanmoins, le principal avantage par rapport à la tourbe est d'améliorer considérablement le rapport air/eau. Ce rapport est pratiquement deux fois au moins celui constaté pour la tourbe (soit supérieur à 10 %), ce qui permet d'améliorer très considérablement la sécurité de la culture vis-à-vis des risques d'asphyxie. Un autre avantage tient au fait que la désinfection des produits peut être conduite de façon beaucoup plus poussée que dans le cas de la tourbe, sans pour autant atteindre des coûts prohibitifs.

Les rapports air/eau dont il est question précédemment sont mesurés sans succion, contrairement aux opérations décrites ci-dessous, pour ce qui concerne la teneur en eau disponible déterminée par ce que l'on nomme le pF. Le rapport air/eau est établi en mesurant successivement les poids du substrat sec, du substrat entièrement imbibé puis après qu'il ait été laissé au repos sur un support plan bien horizontal pendant 10 minutes pendant lesquelles une partie de l'eau s'écoule.

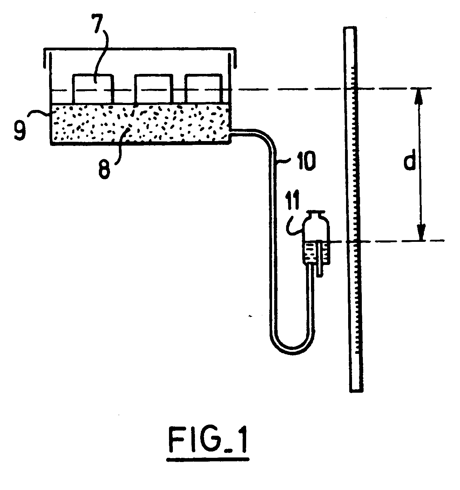

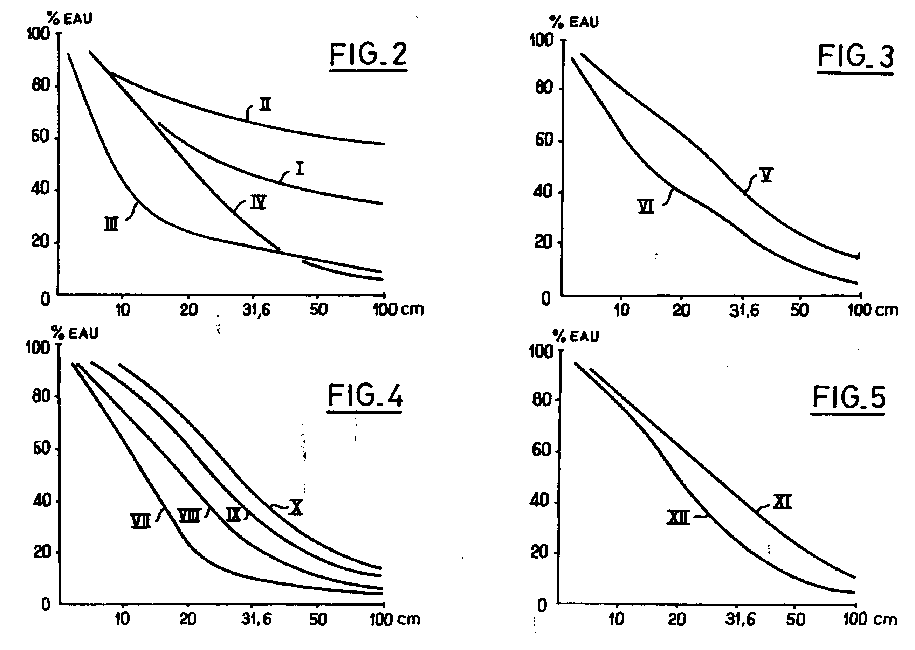

La suite de la description des propriétés hydriques de substrats de culture est faite en se référant aux planches de dessins dans lesquelles :
. **la figure 1** est une représentation schématique de la technique de mesure des propriétés hydriques des substrats de culture,
. **la figure 2** est un graphique de comparaison des potentiels hydriques de différents matériaux de substrats,
. **la figure 3** illustre l'influence de l'épaisseur du substrat sur le potentiel hydrique,
. **la figure 4** illustre la variation de potentiel hydrique en fonction de la masse volumique,
. **la figure 5** illustre la variation de potentiel hydrique en fonction de la finesse des fibres.

Pour caractériser la rétention par le substrat, on détermine la teneur en eau d'échantillons en le soumettant à des forces de succion. On définit ainsi pour une dépression exprimée en fonction de la hauteur de colonne d'eau (en cm), nommé aussi pF, le pourcentage de volume de substrat occupé par la phase aqueuse. Deux valeurs de pF sont particulièrement significatives pour qualifier le substrat : un pF faible correspondant pratiquement aux conditions du maximum de rétention et que l'on choisit arbitrairement égal à 10 cm de colonne d'eau, et un pF égal à 100 cm de colonne d'eau, ce qui correspond pratiquement à la succion la plus élevée qui peut être exercée, par exemple par les plantes maraîchères et, par suite, constitue la limite inférieure d'humidité au-dessus de laquelle le substrat doit être maintenu de façon permanente.

Le substrat est d'autant meilleur que la proportion d'eau extraite entre ces deux valeurs de pF, eau disponible, est plus grande.

La figure 1 montre le dispositif utilisé pour déterminer la rétention d'eau des substrats pour différents pF.

Pour cette détermination, ces échantillons 7 de matériau constituant les substrats ont tous 7,5 cm de haut et sont présentés en carrés de 10 cm de côté. Pour les produits meubles, une forme rigide constitue le cadre qui entoure le produit sur les 4 faces latérales laissant libres les faces supérieure et inférieure.

Ces échantillons sont immergés complètement pendant 1 heure puis placés sur un matériau poreux 8 tapissant le fond d'un bec 9. Le matériau poreux, un lit de sable par exemple, est initialement saturé d'eau.

Le fond du bac 9 communique par une conduite souple 10 avec un vase 11 dont le niveau est fixe (par un système de trop plein). La position du vase 11 sur un support vertical peut être réglée à volonté. La mesure de la dépression d est faite systématiquement en se référant à la mi-hauteur de l'échantillon. On impose successivement les diverses dénivellations correspondant aux pF étudiés. Les mesures sont effectuées après que les échantillons ont été maintenus jusqu'à obtention de l'équilibre dans chaque nouvelle condition de dénivellation.

A l'équilibre, l'échantillon est retiré, pesé, séché et pesé de nouveau après séchage. La différence donne la masse d'eau retenue et, par suite, la proportion d'eau et d'air pour chaque condition de succion imposée.

Les courbes de rétention en fonction du pF pour différents matériaux permettent de comparer leur disponibilité en eau pour les plantes.

Ces courbes, pour les matériaux fibreux minéraux, ont l'aspect représenté aux figures 2 à 5. Sur ces courbes, en abscisse sont portés les logarithmes des succions en centimètre de colonne d'eau et, en ordonnée, les pourcentages de volume de substrat occupé par l'eau. Par différence, il est possible d'en déduire le pourcentage d'air. Dans tous les cas, le volume des fibres elles-mêmes est très faible et se situe aux alentours de 5 %.

Les essais comparatifs de la figure 2 sont effectués sur des échantillons de tourbe blonde (I), de tourbe brune (II), de fragments d'écorce de pins (III) et de particules provenant de substrats de culture constitués à partir de feutres de fibres de verre. Les feutres initiaux sont constitués avec des fibres dont le micronaire (mesure de finesse des fibres) est de 4 sous 5 g. La masse volumique de l'échantillon selon l'invention se situe à 80 kg/m³.

Sur la figure 2, on constate que les différences entre 10 et 100 cm de colonne d'eau sont les plus importantes dans le cas de l'échantillon selon l'invention.

Pour le substrat à base d'écorce - il en serait de même pour de la pouzzolane - la teneur en eau pour 10 cm de succion étant déjà très faible, l'eau disponible ne représente pas plus de 30 à 35 % du volume total.

Pour les tourbes, la teneur en eau pour une faible succion est bonne, mais cette eau est difficilement séparable du substrat. L'eau disponible est d'environ 25 % pour la tourbe blonde et de 45 % pour la tourbe brune.

L'eau disponible pour le substrat selon l'invention est supérieure à 70 % du volume du substrat.

Les produits selon l'invention offrent donc une quantité d'eau disponible très supérieure à celle des produits servant de base à la comparaison.

Nous avons indiqué précédemment toute l'importance de l'eau disponible retenue par le substrat pour la conduite des cultures. On peut remarquer que si la capacité d'aération des racines est aussi un facteur important, dans la pratique cette aération n'impose pas qu'une fraction substantielle du volume du substrat soit occupée par de l'air. L'aération se produit en effet également par le biais de l'oxygène dissous dans la solution nutritive, et cette aération est d'autant mieux assurée que la solution au contact des racines est fréquemment renouvelée. Pour cette raison et compte tenu des conditions d'utilisation - nous avons indiqué plus haut qu'elles correspondaient aux périodes d'importantes absorptions d'eau par les plants - c'est l'aspect irrigation qui est privilégié.

La figure 3 présente des résultats d'essais analogues à ceux de la figure 2 réalisés au moyen des deux substrats constitués de particules de laine de roche dont la masse volumique est d'environ 100 kg/m³. Ces substrats sont formés en échantillons respectivement de 10 (V) et 15 cm (VI) d'épaisseur. Les pourcentages d'eau disponibles sont de 62 % et 55 % du volume du substrat.

Ces essais montrent que l'augmentation d'épaisseur accroît bien la quantité d'eau, mais pas proportionnellement. Pour cette raison, il est préférable de maintenir l'épaisseur dans des limites raisonnables et, de préférence, inférieure à 15 cm.

La série d'essais reportée à la figure 4 montre l'influence de la masse volumique d'un substrat selon l'invention et constitué en particules de laine de verre de micronaire 4 sous 5 g. Les courbes VII à X présentent une masse volumique croissante : 45, 80, 100 et 130 kg/m³. Ces essais montrent une légère progression de la disponibilité en eau pour ces quatre produits (la plus faible s'établissant à 65 % et la plus forte à près de 80 %). La rétention est, par ailleurs, d'autant plus sensible que la masse volumique est plus élevée. Par ce moyen, il est possible d'ajuster le choix du matériau aux cultures envisagées.

La dernière série de comparaisons est faite entre produits à base de particules de laine de verre dont les diamètres des fibres diffèrent. Pour la courbe XI, le micronaire est 2,7/5 g. Pour la courbe (XII) le micronaire est de 4/5 g. Les résultats montrent une très grande concordance. La rétention d'eau est seulement un peu plus forte avec les fibres les plus fines. A noter que ceci ne préjuge pas nécessairement de la quantité d'eau disponible si l'on choisit des échantillons suffisamment denses pour que l'effet d'affaissement sous le poids de liquide ne compromette pas le volume disponible.

Pour les produits selon l'invention répondant aux conditions préférées de masse volumique, l'affaissement sous charge liquide reste limité. Le volume des substrats utilisés est compté en faisant la part de cet affaissement.

Les substrats selon l'invention renferment une forte proportion de particules provenant de substrats usagés. Cette proportion est, de préférence, supérieure à 30 % et le plus souvent supérieure à 70 %.

Les substrats usagés sont les substrats formés de laine minérale dont la structure est bien définie et autoporteuse. Après un usage unique de répété, ces produits, utilisés principalement en serre, doivent être renouvelés. Les produits ainsi mis au rebut sont récupérés pour servir de "matière première" pour la production des substrats selon l'invention.

Les substrats usagés sont, le cas échéant, préalablement dégainés pour ne conserver que la partie fibreuse. Ils sont aussi avantageusement séchés pour faciliter le traitement ultérieur.

Le séchage des substrats usagés est réalisé, de préférence, par entreposage sur une aire à l'abri de l'humidité et bien ventilée. Cette façon de faire est évidemment la moins coûteuse. Il est possible, le cas échéant, d'accélérer le séchage par des circulations d'air chaud Pour faciliter leur séchage, les substrats longs (pains) sont superposés en les entrecroisant et en ménageant un espace entre chaque niveau.

Lorsque dans la structure des feutres des substrats d'origine il existe une certaine stratification des fibres, le substrat est de préférence disposé de telle sorte que les strates se situent dans des plans verticaux. Le séchage en est accéléré.

Le séchage est aussi complet que possible de façon économique. Ceci permet un traitement ultérieur de désinfection et de déchiquetage plus efficace. En règle générale, la teneuren eau des substrats à la fin du séchage ne doit pas dépasser 10 % en poids et, de préférence, est inférieure à 5 % et aussi faible que possible.

Il est avantageux, pour limiter l'opération de séchage du substrat, de cesser l'irrigation en fin de culture (avant l'enlèvement des plants) de telle sorte que les plants "pompent" tout le liquide disponible. On récupère ainsi sans difficulté des substrats dont les teneurs en eau répondent pratiquement aux conditions énoncées précédemment.

La désinfection des substrats peut suivre avantageusement l'étape de séchage. Elle se fait alors de préférence dans l'arrangement établi pour le séchage. L'empilement des substrats est traité dans des conditions habituelles de désinfection pour ce type de matériau. Dans le cas du traitement par gaz chaud, la température est suffisante pour garantir en un temps acceptable la disparition des germes comme le pythium. Le traitement peut aussi être prolongé pour assurer la destruction des bactéries. A titre indicatif pour un traitement à la vapeur à 100-110°C, deux heures suffisent pour l'élimination du pythium. Ce traitement est porté entre 4 et 6 heures pour la stérilisation complète.

D'autres traitements gazeux sont envisageables, par exemple ceux conduits au moyen de bromure de méthyle ou de formol.

Quelle que soit la méthode de désinfection choisie, on contrôle son efficacité pour s'assurer de l'état des substrats.

Les substrats sont soumis à un broyage ou déchiquetage pour les transformer en particules de faibles dimensions de l'ordre du centimètre. Ce broyage permet d'homogénéiser au moins en partie le contenu des substrats usagés. Ces substrats, outre les fibres minérales constituant les feutres à l'origine, renferment en effet les racines des plants préalablement cultivés. Il n'est évidemment pas envisagé de séparer le tissu racinaire du feutre minéral. Le broyage permet seulement de donner au produit une composition moyenne sensiblement uniforme à l'échelle des particules, alors que la répartition racines/fibres dans le substrat retraité est très inégale suivant le point considéré.

Le mode de broyage est, par exemple, du type de celui mis en oeuvre pour le traitement des déchets dans les usines de production des feutres minéraux. Un traitement et un dispositif appropriés pour la laine de roche sont, par exemple, décrits dans la publication FR-A-2 529 917. Pour la laine de verre, qui se comporte d'un point de vue mécanique de façon différente, on utilise de préférence un système de broyeur à marteaux.

Le cas échéant l'opération de désinfection, lorsqu'elle est conduite après séchage, peut être effectuée sur les substrats déchiquetés. Ceci sera préféré si l'opération est réalisée dans une installation industrielle fonctionnant de façon "continue". Dans l'hypothèse où le traitement de désinfection se fait sur le lieu de la culture précédente, on opère de préférence avant déchiquetage.

Les particules obtenues à partir des substrats usagés sont ensuite mises dans l'enveloppe adéquate, le cas échéant après avoir été mélangées avec des particules d'autre origine. Parmi ces dernières, peuvent être notamment utilisées des particules provenant du déchiquetage des déchets de productions des feutres destinés à la culture hors-sol mais non usagés. Ce sont, par exemple, les produits déchiquetés indiqués dans la publication FR-A-2 529 917.

Les enveloppes utilisées sont de type traditionnel dans ces techniques. Il s'agit de films polymères inertes (et surtout non toxiques pour les plantes) et résistants. On utilise en particulier des films de polyéthylène ou de polychlorure de vinyle.

Les substrats selon l'invention sont utilisés de façon usuelle dans le domaine de la culture hors-sol. Le substrat avec son enveloppe est placé sur le sol, de préférence recouvert d'un film étanche le protégeant contre la contamination par le sol. Des ouvertures sont ménagées sur la face supérieure pour la mise en eau. La mise en eau consiste à imprégner complètement le substrat fibreux avec de la solution nutritive, laquelle est retenue dans l'enveloppe étanche. Après une durée plus ou moins longue, de l'ordre de 48 heures, ces substrats sont prêts pour recevoir les plants. On effectue la plantation comme indiqué ci-après. Environ 24 heures plus tard, des entailles sont faites dans l'enveloppe près de la partie au contact du sol pour éliminer l'excès de solution nutritive.

En fonction du niveau auquel sont pratiquées les entailles dans l'enveloppe, il est possible de favoriser le maintien d'une zone saturée d'eau ou non. Le choix est fait en fonction de la nature des la culture, à l'époque à laquelle elle se situe et de la fréquence des apports en eau au substrat.

Dans la pratique les cultures effectuées sous tunnel, comme indiqué précédemment, sont des cultures maraîchères du type tomates, concombres... Pour ces plantes, la culture est généralement commencée sur un substrat de volume réduit. Les plus usuels sont formés de cubes (ou mottes) de feutre minéral d'une dizaine de centimètres de côté. Ces cubes, une fois colonisés, sont transportés sur les substrats principaux qui offrent un volume important, comme nous l'avons indiqué précédemment, et qui sont ceux visés selon l'invention.

Les faces supérieures des substrats selon l'invention, préalablement "mis en eau", sont dégagées de leur enveloppe sur une étendue correspondant à la dimension du cube pour assurer un bon contact entre les deux matériaux et faciliter le passage des racines.

La suite de la culture s'effectue de façon traditionnelle avec, comme avantage, le fait d'avoir une réserve d'eau disponible importante permettant d'espacer les apports.

On constate à l'usage que l'utilisation du produit recyclé selon l'invention ne soulève aucun problème. La présence de matière organique correspondant aux racines de la ou des cultures antérieures au recyclage n'est pas un inconvénient si l'on prend soin de désinfecter correctement. Cette présence des anciennes racines ne modifie pas sensiblement les caractéristiques hydriques des matériaux fibreux minéraux utilisés. En particulier, la présence de ces déchats de racines, qui peut représenter jusqu'à 15 % en volume du substrat ou même plus, ne conduit pas à une rétention trop forte de l'eau qui réduirait la masse d'eau disponible telle que définie.

A l'issue de la culture, les substrats selon l'invention présentent encore l'avantage de pouvoir être commodément éliminés. Dans l'état dans lequel ils se trouvent, ces produits sont difficilement stérilisables chez l'utilisateur. En conséquence, un usage unique est préférable. L'avantage, concernant l'élimination de ces produits, réside dans leur structure particulaire. Dans cet état, ils peuvent être aisément mélangés à la terre. Ils ne constituent donc pas une source de gêne comme les substrats en bloc. Leur incorporation à des terres agricoles peut même constituer une manière d'"allégement" des terrains concernés et contribuer ainsi à leur amélioration.

## Revendications

1. Substrat pour la culture hors-sol constitué à partir de particules ou nodules de laine minérale pour partie au moins provenant de substrats de culture hors-sol usagés, préalablement stérilisés et déchiquetés, les particules ou nodules étant entassés dans une enveloppe constituée d'un film souple étanche à l'eau, ce substrat présentant une masse volumique apparente qui est comprise entre 1,5 et 4 fois celle des substrats, usagés utilisés, la masse volumique des substrats usagés utilisés étant comprise entre 20 et 50 kg/m³ pour les feutres de laine de verre et entre 40 et 90 kg/m³ pour les feutres de laine de roche.

2. Substrat selon la revendication 1 dans lequel la proportion de particules provenant de substrats de culture hors-sol usagés n'est pas inférieure à 50 %.

3. Substrat selon la revendication 1 ou la revendication 2 dans lequel la masse volumique est comprise entre 40 et 120 kg/m³.

4. Substrat selon l'une des revendications précédentes enveloppé dans un film polymère formant un coussin dont l'épaisseur est comprise entre 5 et 15 cm.

5. Substrat selon l'une des revendications précédentes, caractérisé en ce qu'il comporte un mélange de substrats usagés, les uns en laine de verre, les autres en laine de roche.

6. Substrat selon l'une des revendications précédentes destiné à la culture maraîchère, dont les dimensions sont telles que le volume offert à chaque plant est d'au moins 5 dm³.

7. Substrat selon l'une des revendications précédentes dans lequel le rapport air/eau est au moins égal à 10 %.

8. Substrat selon l'une des revendications précédentes, en partie au moins constitué de particules de substrats usagés, lesquels sont susceptibles d'être obtenus par une désinfection en les entreposant dans une atmosphère soit de vapeur d'eau à 100°C, soit d'un gaz connu pour stériliser les substrats de culture.

9. Substrat selon l'une des revendications précédentes, en partie au moins constitué de particules de substrats usagés, ledit substrat étant susceptible d'être obtenu par déchiquetage de ces substrats usagés, leur teneur en eau ayant été ramenée préalablement à 10 % en poids au plus.

## Claims

1. Substrate for soil-less cultivation, consisting of particles or nodules of mineral wool at least partially originating from used soil-less cultivation substrates which have first been sterilised and shredded, the particles or nodules being packed in a wrapping consisting of a watertight flexible film, this substrate having a bulk density which is between 1.5 and 4 times that of the used substrates employed, the density of the used substrates employed being between 20 and 50 kg/m³ for the glass wool felts and between 40 and 90 kg/m³ for the rock wool felts.

2. Substrate according to Claim 1, wherein the proportion of particles originating from used soil-less cultivation substrates is not less than 50%.

3. Substrate according to Claim 1 or Claim 2, wherein the density is between 40 and 120 kg/m³.

4. Substrate according to any one of the preceding claims wrapped in a polymer film forming a cushion of which the thickness is between 5 and 15 cm.

5. Substrate according to any one of the preceding claims, characterised in that it comprises a mixture of used substrates, some of glass wool and the others of rock wool.

6. Substrate according to any one of the preceding claims intended for the cultivation of market garden products, of which the dimensions are such that the volume afforded each plant is at least 5 dm³.

7. Substrate according to any one of the preceding claims, wherein the air/water ratio is at least 10%.

8. Substrate according to any one of the preceding claims, at least partially consisting of particles of used substrates, which can be obtained by disinfection by being kept in an atmosphere either of water vapour at 100°C or of a known gas for sterilising the cultivation substrates.

9. Substrate according to any one of the preceding claims, at least partially consisting of particles of used substrates, it being possible for said substrate to be obtained by the shredding of these used substrates, their water content having previously been reduced to at most 10 weight %.

## Patentansprüche

1. Substrat für erdeloses Kulturverfahren, welches aus Mineralwollepartikeln oder -knöllchen gebildet ist, die zumindest teilweise von gebrauchten, zuvor sterilisierten und zerrissenen Aufzuchtsubstraten stammen, wobei die Partikel oder Knöllchen in eine Hülle aus einer nachgiebigen und wasserdichten Folie gepackt sind, und wobei das Substrat eine Rohdichte aufweist, welche zwischen dem 1,5- und 4-fachen der Rohdichte der verwendeten gebrauchten Substrate liegt, wobei die Rohdichte der gebrauchten Substrate im Falle von Glaswollefilzen zwischen 20 und 50 kg/m³ und im Falle von Steinwollefilzen zwischen 40 und 90 kg/m³ liegt.

2. Substrat nach Anspruch 1, bei dem der Anteil der aus den gebrauchten Substraten stammenden Partikel nicht unter 50 % liegt.

3. Substrat nach Anspruch 1 oder 2, bei dem die Rohdichte zwischen 40 und 120 kg/m³ liegt.

4. Substrat nach einem der vorangehenden Ansprüche, welches in einer Polymerfolie gehüllt ist und ein Kissen mit einer Dicke zwischen 5 und 15 cm bildet.

5. Substrat nach einem der vorangehenden Ansprüche, dadurch gekennzeichnet, daß es eine Mischung von gebrauchten Substraten, einesteils aus Glaswolle und andernteils aus Steinwolle, umfaßt.

6. Substrat nach einem der vorangehenden Ansprüche für den Gemüseanbau mit solchen Ausmaßen, daß das jeder Pflanze zur Verfügung stehende Volumen mindestens 5 dm³ beträgt.

7. Substrat nach einem der vorangehenden Ansprüche, bei dem das Luft-Wasserverhältnis mindestens 10 % beträgt.

8. Substrat nach einem der vorangehenden Ansprüche, welches zumindest teilweise aus Partikeln von gebrauchten Substraten besteht, welche durch Desinfektion mittels Einlagerung in eine Atmosphäre, entweder aus Wasserdampf mit 100°C oder aus einem bekannten Gas für die Sterilisierung der Kultursubstrate, erhalten werden können.

9. Substrat nach einem der vorangehenden Ansprüche, welches zumindest teilweise aus Partikeln aus gebrauchten Substraten besteht, wobei das Substrat durch Zerreißen der gebrauchten Substrate erhalten werden kann, deren Wassergehalt zuvor auf höchstens 10 Gew.-% gebracht worden ist.
